# FASCICULE DE BREVET EUROPEEN

(11) **EP 0 828 874 B1**
(45) Date de publication et mention de la délivrance du brevet: **01.12.1999**
(21) Numéro de dépôt: 96916217.1
(22) Date de dépôt: 20.05.1996
(51) Int. Cl.: D02G 3/16

(54) **FIL HYBRIDE POUR LA FABRICATION DE PREFORMES FIBREUSES DE PIECES EN MATERIAU COMPOSITE ET PROCEDE POUR SA PREPARATION**
HYBRIDFADEN ZUR HERSTELLUNG VON FASERIGEN VORFORMEN FÜR VERBUNDTEILE UND VERFAHREN ZU DESSEN HERSTELLUNG
HYBRID YARN FOR THE FABRICATION OF FIBRE PREFORMS OF COMPOSITE PARTS, AND METHOD FOR ITS PREPARATION

(30) Priorité: 24.05.1995 FR 9506200
(43) Date de publication de la demande: 18.03.1998
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: OLRY, Pierre, F-33000 Bordeaux (FR); COUPE, Dominique, F-33185 Le Haillan (FR); DUVAL, Renaud, F-69380 Les Chères (FR); ZERDOUK, Amina, F-69003 Lyon (FR)
(74) Mandataire: Joly, Jean-Jacques
(86) Numéro de dépôt international: FR9600748
(87) Numéro de publication internationale: WO9637646

(56) Documents cités:
- EP-A- 0 432 439
- EP-A- 0 489 637
- EP-A- 0 555 134
- FR-A- 2 584 106
- FR-A- 2 608 641
- PATENT ABSTRACTS OF JAPAN vol. 015, no. 206 (C-0835), 27 Mai 1991 & JP,A,03 059131 (TOYOBO CO LTD), 14 Mars 1991, & DATABASE WPI Section Ch, Week 9117 Derwent Publications Ltd., London, GB; Class F02, AN 91-120701

## Description

La présente invention se rapporte à la fabrication de préformes fibreuses pour des pièces en matériau composite, et notamment à un fil destiné à cette fabrication.

Un domaine d'application de l'invention est celui des préformes fibreuses pour des disques de friction en matériau composite tels que des disques d'embrayage et, principalement, des disques de frein.

Aujourd'hui, des disques de frein en matériau composite carbone-carbone (C-C) sont couramment utilisés sur des véhicules automobiles de compétition et, à une bien plus grande échelle, dans des systèmes de freinage à disques multiples rotors et stators pour avions.

De façon bien connue, l'élaboration de disques de frein en composite C-C comprend la fabrication de préformes fibreuses en fibres de carbone et la densification des préformes par une matrice de carbone qui comble l'essentiel de la porosité interne accessible initiale des préformes.

La densification est réalisée classiquement par infiltration chimique en phase vapeur ou par voie liquide, c'est-à-dire imprégnation par un précurseur liquide du carbone et transformation du précurseur en carbone par traitement thermique.

Pour la fabrication des préformes fibreuses, une technique couramment utilisée consiste à superposer des strates formées d'une texture fibreuse bidimensionnelle et à lier les strates entre elles par aiguilletage. Les textures fibreuses bidimensionnelles peuvent être des tissus ou des nappes unidirectionnelles pré-aiguilletées. L'aiguilletage des strates est réalisé au fur et à mesure de leur empilement en maintenant de préférence une profondeur d'aiguilletage constante comme décrit dans le document FR-A-2 584 106. Les strates peuvent être empilées à plat et aiguilletées pour obtenir des plaques planes dans lesquelles les préformes annulaires des disques de freins sont découpées. Afin d'éviter des chutes importantes de matière, les strates peuvent être formées de secteurs annulaires découpés dans la texture fibreuse bidimensionnelle et juxtaposés, les lignes de séparation entre secteurs étant décalées d'une strate à l'autre.

Les textures fibreuses bidimensionnelles sous forme de tissus ou nappes unidirectionnelles constituées de fils de carbone peuvent être associées à un voile de fibres de carbone qui procure les fibres susceptibles d'être entraînées par les aiguilles. Une autre solution consiste à réaliser l'aiguilletage sur des textures bidimensionnelles formées à partir de fibres non pas en carbone, mais en un précurseur du carbone qui se prête beaucoup mieux à l'aiguilletage. La transformation du précurseur en carbone est réalisée par traitement thermique de la préforme aiguilletée.

Il a aussi été proposé dans le document EP-A-0 489 637 de réaliser les textures fibreuses bidimensionnelles servant à la fabrication des préformes à partir d'un fil composé essentiellement de fibres discontinues, parallèles entre elles et non retordues, l'intégrité du fil étant assurée par un fil de guipage en matière fugitive. L'élimination du fil de guipage, par dissolution ou par la chaleur, libère les fibres discontinues et autorise l'aiguilletage même avec des fibres à l'état carbone. En outre, la libération des fibres leur permet de foisonner dans tout le volume de la préforme conférant à celle-ci une porosité plus facilement et plus uniformément accessible au matériau de la matrice lors de la phase de densification. Celle-ci est alors réalisée de façon plus complète et avec une moindre hétérogénéité.

Dans le cadre de l'application aux disques de frein, la nature et l'origine des fibres constituant les préformes, la constitution des textures bidimensionnelles utilisées pour fabriquer les préformes, la façon dont les strates formées par ces textures sont liées entre elles, en particulier les paramètres d'aiguilletage, les traitements notamment thermiques auxquels les préformes peuvent être soumises avant densification, la nature de la matrice et le mode de densification sont autant de facteurs qui influent de façon significative sur les propriétés mécaniques et tribologiques des disques.

Or, notamment pour les freins d'avions, il est requis des disques utilisés non seulement des propriétés mécaniques leur permettant de résister aux sollicitations rencontrées à chaud et à froid, mais aussi des propriétés tribologiques assurant un comportement satisfaisant dans différentes situations : freinage lors du roulage à froid (roulage sur pistes avant décollage), freinage lors du roulage à chaud (roulage sur pistes après atterrissage), freinage lors d'un atterrissage normal, et freinage de détresse (interruption de la phase de décollage en limite de piste d'envol). Mais dans des domaines où les énergies à absorber sont plus modestes, il est souhaitable que les faces frottantes des disques atteignent très vite une température suffisante, donc que la conductibilité thermique du matériau composite soit plus limitée que celle nécessitée par exemple pour le freinage de détresse des avions.

Lors d'essais sur banc, la demanderesse a constaté l'influence importante de la nature des fibres de la préforme sur les performances des disques de frein et la présente invention a pour objet de proposer un fil convenant particulièrement pour la réalisation de préformes fibreuses de pièces en matériau composite, notamment mais non exclusivement, de disques de frein. Un autre objet de l'invention est de proposer un procédé de fabrication d'un tel fil.

Selon un aspect de l'invention, un fil destiné à la fabrication de préformes fibreuses pour des pièces en matériau composite et comportant des fibres discontinues parallèles entre elles et non retordues maintenues au moyen d'un fil de guipage en une matière fugitive enroulé autour des fibres, est caractérisé par le fait que le fil est un fil hybride dans lequel les fibres comprennent un mélange intime d'au moins deux natures différentes de fibres choisies parmi des fibres de carbone ou de précurseur de carbone à base polyacrylonitrile, des fibres de carbone ou de précurseur de carbone à base brai anisotrope, des fibres de carbone ou de précurseur de carbone à base brai isotrope, des fibres de carbone ou de précurseur de carbone à base phénolique, des fibres de carbone ou de précurseur de carbone à base cellulosique et des fibres en céramique ou en précurseur de céramique, et le mélange de fibres comprend des fibres de carbone ou de précurseur de carbone qui, à l'état carbone, représentent au moins 15 % en poids et de préférence au moins 30 % en poids du mélange de fibres et constituent des fibres de carbone haute résistance, ayant une résistance en traction au moins égale à 1 500 MPa, de préférence au moins égale à 2 000 MPa et un module au moins égal à 150 GPa, de préférence au moins égal à 200 GPa.

Par fibres de carbone ou de précurseur de carbone, on entend ici des fibres qui sont à l'état précurseur initial, par exemple à l'état polyacrylonitrile, ou à l'état carbone, après transformation complète du précurseur par carbonisation, ou en un état intermédiaire entre l'état précurseur initial et l'état carbone, par exemple un état préoxydé ou semi-carbonisé. De même, par fibres en céramique ou en précurseur de céramique, on entend des fibres à l'état précurseur initial, ou à l'état céramique, après transformation complète du précurseur ou en un état intermédiaire entre l'état précurseur initial et l'état céramique, par exemple un état semi-céramisé.

Le mélange de fibres de natures différentes autorise une meilleure adaptation des préformes fibreuses aux conditions d'utilisation des pièces en matériau composite. Une caractéristique essentielle de l'invention réside dans le fait que l'hybridation n'est pas réalisée au niveau de fils de natures différentes qui seraient utilisés pour élaborer les préformes fibreuses, mais au niveau des fibres constitutives des fils avec, de surcroît, un mélange intime de celles-ci.

Ainsi, dans le cas par exemple des disques de frein, le mélange intime des fibres fait que le "troisième corps" qui se crée à l'interface des faces frottantes lors de la friction est homogène sur toute cette interface et cumule de la façon la plus efficace les propriétés apportées par les natures différentes des fibres.

Une préforme fibreuse de pièce en matériau composite est fabriquée en réalisant une texture fibreuse bidimensionnelle au moins partiellement au moyen d'un fil hybride, en superposant des strates formées par la texture fibreuse et, après élimination du fil de guipage, en aiguilletant les strates superposées.

L'élimination du fil de guipage est réalisée avant ou au moment de la superposition des strates de sorte que l'aiguilletage peut être réalisé progressivement, après la mise en place de chaque strate, comme décrit dans le document FR-A-2 584 106 déjà cité.

Lorsque le fil hybride utilisé pour la fabrication de la préforme fibreuse comprend des fibres à l'état précurseur initial ou en un état intermédiaire entre celui-ci et l'état carbone ou céramique final, la transformation des fibres en carbone ou céramique est réalisée par traitement thermique. Celui-ci peut être effectué à tout stade d'élaboration de la préforme fibreuse aiguilletée, avant densification de celle-ci, c'est-à-dire sur le fil hybride, sur la préforme terminée ou à tout stade intermédiaire. Lorsque le fil hybride comprend des fibres à l'état carbone, la préforme fibreuse aiguilletée peut aussi être traitée thermiquement à une température supérieure à 1 300°C, pouvant aller jusqu'à 2 300°C. Ce traitement thermique a alors un effet de stabilisation des fibres d'un point de vue chimique - c'est-à-dire composition stabilisée de la fibre, notamment par élimination d'azote résiduel -, d'un point de vue structural - c'est-à-dire perfection plus ou moins grande de nappes de plans graphitiques - et d'un point de vue textural - c'est-à-dire orientation de ces nappes par rapport à l'axe de la fibre et arrangement de ces nappes et de leurs circonvolutions par rapport à la surface de la fibre. Le traitement thermique est de préférence réalisé à environ 1 600°C.

La présence de fibres de carbone haute résistance est prévue au regard, en particulier, des propriétés mécaniques requises du matériau composite. Le pourcentage en poids de ces fibres est, de préférence, au moins égal à 30 %.

Il peut être avantageux que le mélange de fibres comprenne des fibres de carbone ou de précurseur de carbone qui, à l'état carbone représentent 15 % en poids du mélange de fibres et constituent des fibres de carbone bas module, c'est-à-dire ayant un module de Young au plus égal à 100 GPa. les fibres de carbone bas module sont choisies parmi les fibres de carbone à précurseur phénolique, les fibres de carbone à précurseur brai isotrope et les fibres de carbone à précurseur cellulosique.

De préférence, à l'état carbone, le pourcentage en poids de fibres de carbone bas module est au moins égal à 30 %.

Lorsque l'aiguilletage est réalisé sur des fibres à l'état carbone, non à l'état précurseur, la présence de fibres carbone bas module est avantageuse car la demanderesse a constaté que ces fibres sont préférentiellement et même majoritairement tirées par les aiguilles à travers les strates superposées. Dans le cadre de l'application à des disques de frein et lorsque les strates des préformes sont parallèles aux surfaces frottantes, une présence majoritaire de fibres bas module en direction perpendiculaire aux faces frottantes contribue à ne pas conférer une trop grande rigidité transversale aux disques. Ceci autorise une déformation élastique suffisante des disques pour assurer un frottement sur toute l'étendue des faces frottantes, et pas seulement localement, dans le cas où ces faces ne sont pas rigoureusement planes et parallèles par suite, par exemple, d'une usure irrégulière.

Le fait que ce sont les fibres carbone bas module qui sont déplacées par les aiguilles tient vraisemblablement à ce que les fibres carbone haut module - telles que celles de carbone à précurseur polyacrylonitrile préoxydé ou celles de carbone à précurseur brai anisotrope - ont tendance à être cassées bien que discontinues et non retordues. Ceci est d'autant plus vrai lorsque le diamètre des fibres carbone haut module est plus grand. Ainsi, une sélection quasi-exclusive de fibres carbone bas module peut être réalisée par l'aiguilletage lorsque les fibres de carbone haut module présentes dans le fil hybride ont un diamètre supérieur à 8 µm, de préférence supérieur à 10 µm. Une moindre rigidité de la préforme fibreuse et de la pièce en matériau composite en direction perpendiculaire aux strates est ainsi garantie.

Un autre moyen de sélectionner préférentiellement des fibres de carbone bas module par l'aiguilletage consiste à réaliser une texture fibreuse bidimensionnelle dans laquelle des fils hybrides s'étendant dans une direction comprennent une proportion significative de fibres carbone bas module et à aiguilleter la texture fibreuse au moyen d'aiguilles dont l'orientation est choisie de sorte qu'elles accrochent préférentiellement les fibres des fils hybrides orientés dans cette direction.

Selon un autre de ses aspects, l'invention a pour but de fournir un procédé de fabrication d'un fil hybride tel que défini ci-avant.

Ce but est atteint grâce à un procédé comportant les étapes qui consistent à :
- fournir des ensembles de filaments continus, chaque ensemble étant constitué de filaments de même nature choisie parmi un carbone ou un précurseur de carbone à base polyacrylonitrile , un carbone ou un précurseur de carbone à base brai anisotrope, un carbone ou un précurseur de carbone à base brai isotrope, un carbone ou un précurseur de carbone à base phénolique, un carbone ou un précurseur de carbone à base cellulosique et une céramique ou un précurseur de céramique,
- soumettre chaque ensemble de fibres à un étirage et craquage contrôlés pour obtenir des fibres discontinues parallèles entre elles,
- mélanger intimement les fibres d'au moins deux ensembles de fibres craqués de natures différentes l'une de l'autre, pour obtenir un fil hybride dans lequel les fibres discontinues mélangées sont parallèles entre elles et non retordues, le mélange comprenant des fibres de carbone ou de précurseur de carbone qui, à l'état carbone représentent au moins 15 %, et de préférence au moins 30 % en poids du mélange de fibres et constituent des fibres carbone haute résistance ayant une résistance en traction au moins égale à 1 500 MPa, de préférence au moins égale à 2 000 MPa et un module au moins égal à 150 GPa, de préférence au moins égal à 200 GPa, et
- entourer les fibres discontinues mélangées d'un fil de guipage en une matière fugitive afin d'assurer l'intégrité du fil hybride obtenu.

Avantageusement, les ensembles de fils sont sous forme de rubans et le mélange intime des fibres d'au moins deux rubans de fibres de natures différentes est réalisé par passage dans un gill-box.

L'invention sera mieux comprise à la lecture de la description faite ci-après, à titre indicatif mais non limitatif de plusieurs exemples de mise en oeuvre. Référence sera fait aux dessins annexés sur lesquels :
- la figure 1 est un organigramme illustrant un procédé de réalisation d'un disque de frein en matériau composite carbone-carbone utilisant une préforme formée au moyen d'un fil hybride, conformément à l'invention, et
- la figure 2 est une vue très schématique illustrant un mode d'aiguilletage permettant de sélectionner préférentiellement certaines des fibres constitutives des fils d'une texture fibreuse aiguilletée.

Les exemples qui suivent concernent la réalisation de disques de frein en matériau composite qui, tout en étant un domaine d'application de l'invention plus particulièrement visé, n'est pas exclusif d'autres applications.

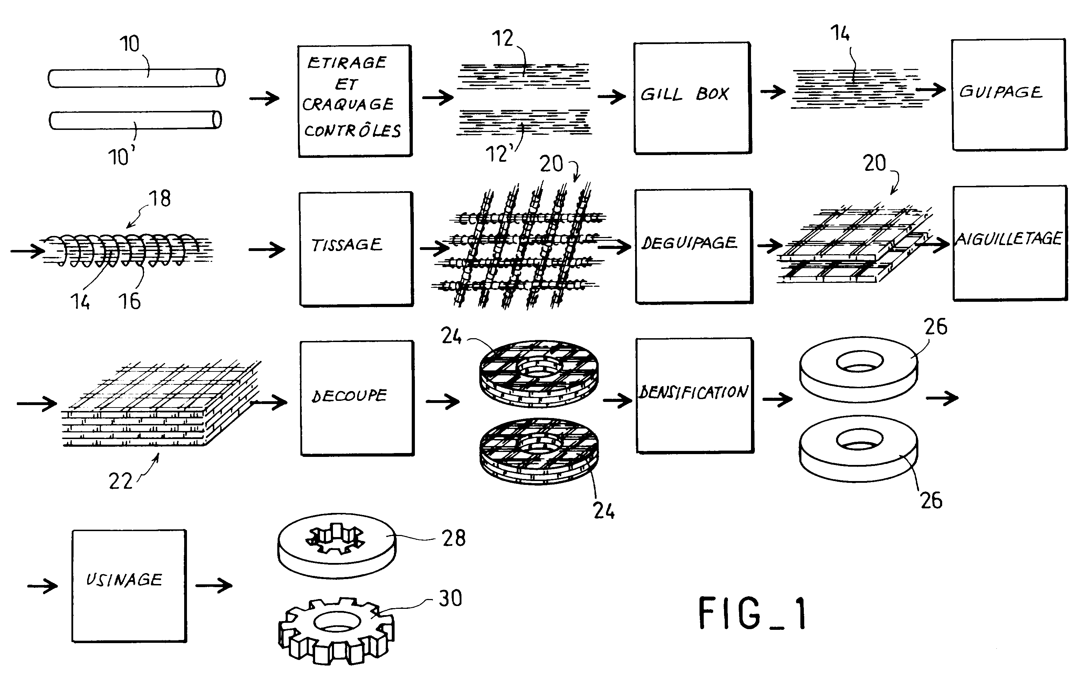

Dans tous ces exemples, le processus illustré par la figure 1 est utilisé pour la fabrication d'un fil hybride, la réalisation d'une texture fibreuse bidimensionnelle au moyen d'un ou plusieurs fils dont au moins un est un fil hybride, la fabrication d'une préforme fibreuse à partir de la texture fibreuse bidimensionnelle, et l'obtention d'un disque de frein en matériau composite à partir d'une préforme.

Selon la terminologie utilisée dans la présente description, un fil hybride est un fil constitué de fibres de natures différentes.

Pour la fabrication du fil hybride, on part d'ensembles de filaments continus sous forme de câbles ou de rubans, chaque ensemble étant formé de filaments de même nature et des ensembles étant choisis de différentes natures correspondant à celles entrant dans la composition du fil hybride. Les nombres de filaments des différents câbles ou rubans sont choisis, compte tenu de leurs diamètres, pour obtenir le mélange de fibres dans les proportions en poids souhaitées dans le fil hybride.

Comme indiqué plus haut, le fil hybride comporte des fibres de carbone ou de précurseur de carbone qui, à l'état carbone, représentent au moins 15 % en poids et de préférence au moins 30 % en poids du mélange de fibres et constituent des fibres de carbone haute résistance, telles que des fibres de carbone à précurseur polyacrylonitrile (PAN) ou des fibres de carbone à précurseur brai anisotrope. En outre, en particulier pour l'application aux disques de frein, il est préférable que le fil hybride comporte des fibres de carbone ou de précurseur de carbone qui, à l'état carbone, représentent au moins 15 % en poids et de préférence au moins 30 % en poids de fibres de carbone bas module telles que des fibres à précurseur phénolique, des fibres à précurseur cellulosique ou des fibres à précurseur brai isotrope.

Par fibres de carbone haute résistance, on entend ici des fibres de carbone ayant une résistance à la rupture en traction au moins égale à 1 500 MPa, de préférence au moins égale à 2 000 MPa et plus préférentiellement encore au moins égale à 2500MPa, et avec un module au moins égal à 150 GPa, de préférence au moins égal à 200 GPa et plus préférentiellement encore au moins égal à 230 GPa. Par fibres de carbone bas module, on entend des fibres de carbone dont le module de Young est au plus égal à 100 MPa, de préférence au plus égal à 70 MPa. Des fibres autres que de carbone peuvent être présentes, notamment des fibres de céramique, telles que des fibres composées essentiellement de carbure de silicium, d'alumine, de silice, de silicates, d'aluminosilicate, ....

Les rubans ou câbles multifilaments de natures différentes, par exemple deux rubans 10, 10' sont soumis à une opération d'étirage et craquage contrôlés les transformant en rubans 12, 12' formés de fibres discontinues parallèles entre elles. Un procédé d'étirage et craquage contrôlés d'un câble multi-filament est décrit dans le document FR-A-2 608 641.

Les fibres de natures différentes des rubans craqués 12, 12' sont mélangées intimement pour former un ruban unique 14 constitué de fibres discontinues, parallèles entre elles et non retordues. Cette opération peut être réalisée par passage des rubans craqués 12, 12' dans un gill-box, c'est-à-dire en faisant passer la nappe de fibres des rubans craqués 12, 12' entre des cylindres d'alimentation et des cylindres d'étirage sur un champ de barrettes à aiguilles, ou gills. Il s'agit d'une opération bien connue dans l'industrie textile.

La cohésion de l'ensemble des fibres constituant le ruban 14 est assurée par guipage au moyen d'un fil de guipage 16 en matière fugitive, de sorte que l'on obtient un fil hybride guipé 18 (ou fil méché hybride) dans lequel les fibres discontinues sont laissées parallèles entre elles et non retordues. Par matière fugitive, qui constitue le fil de guipage, on entend ici toute matière susceptible d'être éliminée sans laisser de résidu sur le fil hybride et sans altération des fibres du fil. A titre d'exemple, la matière fugitive est un polymère soluble tel qu'un alcool polyvinylique (PVA) ou un polymère susceptible d'être totalement éliminé par traitement thermique, tel que l'acétate de polyvinyle ou le polyéthylène. Le guipage confère au fil hybride la tenue nécessaire pour subir des opérations textiles, notamment le tissage. Le guipage est réalisé au moyen d'une machine connue, par exemple la machine "Parafil" de la société allemande Spindelfabrike Suessen.

Une texture bidimensionnelle 20 est formée par exemple par tissage du fil hybride guipé 18. D'autres textures pourraient être réalisées, en particulier des textures formées par tricotage ou par tressage du fil hybride guipé, ou encore des textures formées par superposition et aiguilletage léger de quelques nappes unidirectionnelles, par exemple 2 ou 3, les directions des fils dans les nappes étant décalées angulairement d'une nappe à l'autre.

Après réalisation de la texture, le fil de guipage est éliminé. Lorsqu'il s'agit d'un fil en PVA, l'élimination est effectuée par lavage dans un bain d'eau, essorage et séchage. Lorsque le fil de guipage est en acétate de polyvinyle ou polyéthylène, l'élimination est effectuée par traitement thermique.

Plusieurs couches de tissu 20 sont superposées et aiguilletées pour réaliser une plaque 22 dont l'épaisseur correspond sensiblement à celle de disques de frein à réaliser. L'élimination du fil de guipage permet aux fibres du fil hybride de s'expanser au sein du tissu, permettant un aiguilletage direct de celui-ci. L'aiguilletage est réalisé au fur et à mesure de la superposition des couches de tissu. Chaque nouvelle couche est aiguilletée sur la structure sous-jacente en maintenant une profondeur d'aiguilletage constante et, après mise en place et aiguilletage de la dernière couche, plusieurs passes d'aiguilletage de finition peuvent être réalisées, comme décrit dans le document FR-A-2 584 106.

Des préformes annulaires 24 aux dimensions approximatives des disques de frein à réaliser sont découpées dans la plaque aiguilletée 22.

La densification des préformes 24 par une matrice de carbone pyrolytique est réalisée dans un four d'infiltration chimique en phase vapeur, de façon bien connue en soi.

Les préformes densifiées 26 sont ensuite usinées de manière à obtenir des disques de frein dont les faces frottantes sont rectifiées et dont les bords intérieurs ou extérieurs présentent des encoches permettant la liaison des disques rotors 28 ou stators 30 avec une roue ou une couronne fixe.

Comme déjà indiqué, le fil hybride peut être réalisé avec des fibres en carbone et éventuellement céramique ou avec des fibres en précurseur de carbone et éventuellement en précurseur de céramique. Dans ce dernier cas, les fibres peuvent être telles qu'obtenues par filage du précurseur initial ou être en un état précurseur intermédiaire entre l'état initial et l'état carbone ou céramique. Un tel état intermédiaire peut être un état préoxydé, ou semi-carbonisé ou semi-céramisé. La transformation du précurseur en carbone ou céramique est réalisée par traitement thermique. Celui-ci est effectué après réalisation de la préforme aiguilletée, par exemple avant ou après découpe de la plaque aiguilletée 22. Lorsque le traitement thermique est effectué après découpe des préformes des disques, il y a lieu de tenir compte du retrait accompagnant la transformation du précurseur. Afin d'éviter un phénomène de retrait différentiel lorsque des fibres du fil hybride sont à l'état précurseur, on fait en sorte que le fil soit constitué de fibres ayant toutes un même état précurseur ou des états similaires.

### Exemple 1

En suivant le mode opératoire décrit en référence à la figure 1, des disques de frein en matériau composite C-C sont obtenus comme suit.

Un fil hybride est réalisé comprenant 75 % en poids de fibres de carbone à précurseur PAN provenant d'un câble de 12000 filaments (12K) commercialisé par la société Tenax sous la dénomination "Tenax HTA 5411", et 25 % en poids de fibres de carbone à précurseur phénolique provenant d'un câble de 2 000 filaments (2K) commercialisé par la société Kynol. Les fibres de carbone à précurseur PAN ont un module de Young égal à environ 230 GPa et une résistance à rupture en traction égale à environ 2 000 MPa, tandis que les fibres de carbone à précurseur phénolique ont un module de Young égal à environ 60 GPa et un résistance à rupture en traction égale à environ 700 MPa. En fixant à environ 150 GPa et 1 500 MPa les limites entre bas ou haut modules et entre basse et haute résistances, on note que les fibres à précurseur PAN sont des fibres haut module et haute résistance, tandis que les fibres à précurseur phénolique sont des fibres à bas module et basse résistance.

Le fil hybride obtenu après étirage et craquage contrôlés des câbles et mélange intime de leurs fibres de carbone est guipé au moyen d'un fil de guipage PVA de titre 45 dtex.

Un tissu à armure satin est réalisé par tissage du fil hybride guipé. Après élimination du fil de guipage par lavage à l'eau à 80°C pendant 10 min, essorage et séchage, des strates de tissu sont superposées et aiguilletées. Des préformes annulaires sont découpées dans la plaque ainsi obtenue et densifiées par une matrice de carbone pyrolytique par infiltration chimique en phase vapeur.

Deux disques de frein ainsi obtenus sont, après usinage final, soumis à un essai au banc consistant à faire frotter les disques l'un contre l'autre en simulant successivement :
- 5 cycles de freinage correspondant à des conditions de roulage au sol à froid pour un avion de type "Airbus A300",
- 1 cycle d'atterrissage normal,
- 5 cycles de freinage correspondant à des conditions de roulage au sol à chaud, et
- 1 cycle de freinage de détresse.

L'usure des disques est déterminée par mesure des diminutions d'épaisseur et pertes de poids et le coefficient de frottement est mesuré lors du freinage de détresse (haute énergie supérieure à environ 2500 kJ/kg). La régularité du coefficient de frottement pour les énergies moyennes (environ 100 à 200 kJ/kg) a également été examinée.

Le tableau donné après les exemples indique pour chacun les résultats obtenus de façon qualitative par rapport à des résultats de référence. Ces derniers sont ceux obtenus en soumettant au même essai de friction au banc deux disques de frein réalisés comme dans l'exemple 1 aux seules exceptions que le fil de fibres de carbone utilisé n'est pas un fil hybride mais un fil formé exclusivement de fibres de carbone à précurseur PAN (pas d'opération de mélange intime de fibres) et que les préformes annulaires aiguilletées sont, avant densification, soumises à un traitement thermique à 1 600°C.

### Exemple 2

On procède comme dans l'exemple 1, mais en soumettant les préformes annulaires des disques de frein, avant densification, à un traitement thermique sous vide à 1 600°C pendant 30 min.

Ce traitement thermique a pour effet de stabiliser les fibres de carbone à précurseur PAN préoxydé en provoquant l'élimination de l'azote résiduel, donc de stabiliser les préformes à la fois chimiquement et dimensionnellement.

### Exemple 3

On procède comme dans l'exemple 1, mais en utilisant un fil hybride comprenant 50 % en poids de fibres de carbone à précurseur PAN provenant d'un câble 12K de type "Tenax HTA 5411" et 50 % en poids de fibres de carbone à précurseur brai anisotrope provenant d'un câble de 2K filaments commercialisé par la société japonaise Nippon Oil sous la référence "XNC 15". Les filaments de carbone à précurseur brai anisotrope ont un diamètre de 10 µm, un module de Young de 160 GPa et une résistance à rupture en traction de 2 000 MPa.

Le diamètre des fibres à précurseur brai est tel qu'elles ne sont pratiquement pas entraînées mais éventuellement cassées par les aiguilles lors de l'aiguilletage, de sorte que ce sont essentiellement les fibres à précurseur PAN qui sont entraînées.

### Exemple 4

On procède comme dans l'exemple 3, mais en soumettant les préformes annulaires des disques de frein, avant densification, à un traitement thermique sous vide à 1 600°C pendant 10 min. Ce traitement a pour effet de stabiliser les fibres à précurseur PAN et d'augmenter le module et la résistance des fibres de carbone à précurseur brai anisotrope.

### Exemple 5

On procède comme dans l'exemple 4 mais en portant la température de traitement thermique à 2 200°C ce qui augmente encore le module des fibres à précurseur brai.

### Exemple 6

On procède comme dans l'exemple 3, mais en utilisant des fibres de carbone à précurseur brai anisotrope de diamètre 7 µm provenant d'un câble de 2K filaments commercialisé par la société japonaise Nippon Steel sous la référence "NUP 9 Eskainos". Les filaments ont un module de Young de 160 GPa et une résistance à rupture en traction de 2 500 MPa.

Le diamètre des fibres à précurseur brai leur permet d'être entraînées par les aiguilles lors de l'aiguilletage.

### Exemple 7

On procède comme dans l'exemple 6 mais en soumettant les préformes annulaires des disques de frein, avant densification, à un traitement thermique sous vide à 1 600°C, comme dans l'exemple 4.

### Exemple 8

On procède comme dans l'exemple 7, mais en portant la température de traitement thermique à 2 200°C.

### Exemple 9

On procède comme dans l'exemple 1 mais en utilisant un fil hybride comprenant 85 % en poids de fibres de carbone à précurseur PAN provenant d'un câble 12K de type "Tenax HTA 5411" et 15 % en poids de fibres composées essentiellement de carbure de silicium. Ces dernières, ayant une teneur en oxygène de 12 % en poids, sont des fibres de diamètre 8 µm, donc aiguilletables, commercialisées par la société japonaise UBE sous l'appellation "Tyranno Lox M" sans ensimage.

### Exemple 10

On procède comme dans l'exemple 9, mais en remplaçant les fibres "Tyranno Lox M" par des fibres de carbure de silicium à teneur résiduelle en oxygène de 0,4% en poids commercialisées par la société japonaise Nippon Carbon sous l'appellation "Nicalon". Ces fibres ont un diamètre de 14 µm, donc pratiquement pas aiguilletables.

### Exemple 11

On procède comme dans l'exemple 10, mais en soumettant les préformes annulaires des disques de frein, avant densification, à un traitement thermique sous vide à 1 600°C pendant 30 min. Ce traitement a pour effet de stabiliser les fibres de carbone et les fibres de carbure de silicium, le faible taux d'oxygène dans ces dernières autorisant une telle stabilisation.

### Exemple 12

On procède comme dans l'exemple 1, mais en utilisant un fil hybride comprenant 50 % en poids de fibres de carbone à précurseur brai anisotrope de l'exemple 6 et 50 % en poids de fibres de carbone à précurseur phénolique de l'exemple 1.

### Exemple 13

On procède comme dans l'exemple 12, mais en soumettant des préformes annulaires des disques de frein, avant densification, à un traitement thermique sous vide à 1 600°C pendant 30 min. Ce traitement a notamment pour effet d'augmenter le module et la résistance des fibres de carbone à précurseur brai anisotrope.

### Exemple 14

On procède comme dans l'exemple 13, mais en portant la température de traitement thermique à 2 200°C, ce qui a pour effet d'augmenter encore le module des fibres à précurseur brai.

### Exemple 15

On procède comme dans l'exemple 3 mais en remplaçant les fibres de carbone à précurseur brai anisotrope par des fibres carbone à précurseur cellulosique ayant une résistance à rupture en traction de 800 MPa et un module de Young de 60 GPa.

**Tableau**

| Exemple | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Usure | ++ | ++ | + | ++ | + | + | ++ | + | ++ | ++ | + | +++ | ++ | + | + |
| Coefficient de frottement à haute énergie | = | ++ | + | + | = | + | + | = | ++ | ++ | +++ | + | + | ++ | - |
| Régularité du coefficient de frottement à énergie moyenne | + | = | = | = | = | = | = | = | + | ++ | ++ | + | = | = | +++ |

### Dans ce tableau :

Pour ce qui est de l'usure,
- le symbole = indique, par rapport aux résultats de référence une usure équivalente à ± 10% près,
- le symbole + indique une valeur de l'usure diminuée de 10 à 20 %,
- le symbole ++ indique une valeur de l'usure diminuée de 20 à 30 %, et
- le symbole +++ indique une valeur de l'usure diminuée de plus de 30 %.

Pour ce qui est du coefficient de frottement,
- le le symbole - indique, par rapport aux résultats de référence une diminution comprise entre 5 et 10 %,
- le symbole = indique une valeur équivalente à ± 5 % près,
- le symbole + indique une augmentation comprise entre 5 et 10 %,
- le symbole ++ indique une augmentation comprise entre 10 et 15 %, et
- le symbole +++ indique une augmentation supérieure à 15 %.

Dans les exemples qui précèdent, un seul et même fil hybride est utilisé pour la fabrication de la texture fibreuse bidimensionnelle servant à l'élaboration des préformes.

Toutefois, différents fils hybrides peuvent être utilisés, par exemple, dans un tissu, en utilisant des premiers fils hybrides en chaîne et d'autres en trame, ou, dans des nappes unidirectionnelles superposées, en utilisant des premiers fils hybrides pour une nappe et d'autres pour une autre nappe. Il est encore envisageable, dans un tissu ou dans des nappes unidirectionnelles, d'utiliser un fil hybride dans une direction et un fil non hybride dans une autre direction.

L'utilisation de fils différents suivant deux directions dans la texture fibreuse bidimensionnelle permet de sélectionner les fibres susceptibles d'être entraînées par l'aiguilletage en choisissant l'orientation des aiguilles.

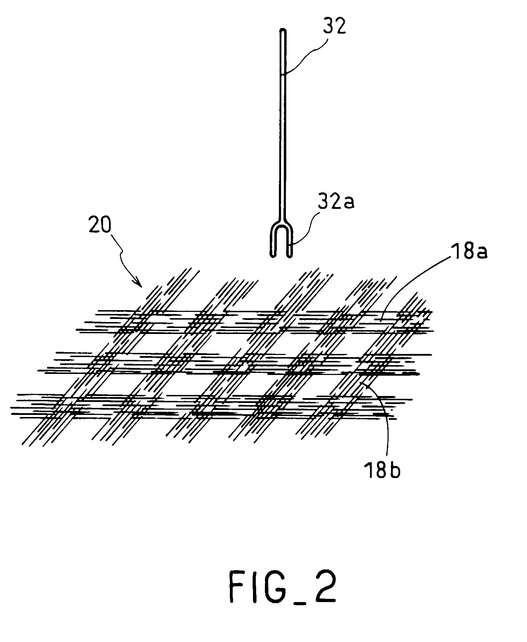

Ainsi, comme le montre très schématiquement la figure 2, une aiguille à fourche 32 dont le plan de la fourche 32a est parallèle aux fils de trame 18a du tissu 20 ne prélèvera pratiquement pas de fibres dans les fils de trame, mais quasi exclusivement dans les fils de chaîne 18b. Si l'on désire que les fibres entraînées par l'aiguilletage présentent une caractéristique particulière, par exemple un bas module pour les raisons indiquées plus haut dans le cas de disques de frein, il suffit alors d'utiliser des fils de chaîne 18b comprenant une proportion relativement importante de telles fibres avec un diamètre pas trop grand. L'on peut même faire en sorte que seules ces fibres seront entraînées en choisissant pour les autres fibres des fils de chaîne un diamètre suffisamment grand pour les rendre non aiguilletables. Un résultat similaire peut être obtenu avec une aiguille à barbes dès lors que les barbes sont dans un même plan.

## Revendications

1. Fil destiné à la fabrication de préformes fibreuses pour des pièces en matériau composite, comportant des fibres (14) discontinues parallèles entre elles et non retordues maintenues au moyen d'un fil de guipage (16) en une matière fugitive enroulé autour des fibres,
caractérisé en ce que le fil (18) est un fil hybride dans lequel les fibres comprennent un mélange intime d'au moins deux natures différentes de fibres choisies parmi des fibres de carbone ou de précurseur de carbone à base polyacrylonitrile préoxydé, des fibres de carbone ou de précurseur de carbone à base brai anisotrope, des fibres de carbone ou de précurseur de carbone à base brai isotrope, des fibres de carbone ou de précurseur de carbone à base phénolique, des fibres de carbone ou de précurseur de carbone à base cellulosique et des fibres en céramique ou en précurseur de céramique, et le mélange de fibres comprend des fibres de carbone ou de précurseur de carbone qui, à l'état carbone, représentent au moins 15 % en poids du mélange de fibres et constituent des fibres de carbone haute résistance, ayant une résistance en traction au moins égale à 1 500 MPa et un module au moins égal à 150 GPa.

2. Fil selon la revendication 1, caractérisé en ce que les fibres qui, à l'état carbone, sont des fibres haute résistance, sont choisies parmi les fibres à base de précurseur polyacrylonitrile et les fibres à base de précurseur brai anisotrope.

3. Fil selon l'une quelconque des revendications 1 et 2, caractérisé en ce que le mélange de fibres comprend des fibres de carbone ou de précurseur de carbone qui, à l'état carbone, sont des fibres de carbone haute résistance et représentent au moins 30 % en poids du mélange de fibres.

4. Fil selon l'une quelconque des revendications 1 à 3, caractérisé en ce que, à l'état carbone, les fibres haute résistance ont une résistance en traction au moins égale à 2 000 MPa.

5. Fil selon l'une quelconque des revendications 1 à 4, caractérisé en ce que, à l'état carbone, les fibres haute résistance ont un module au moins égal à 200 GPa.

6. Fil selon l'une quelconque des revendications 1 à 5, caractérisé en ce que le mélange de fibres comprend des fibres de carbone ou de précurseur de carbone qui, à l'état carbone, représentent au moins 15 % en poids du mélange de fibres et constituent des fibres de carbone bas module, ayant un module de Young au plus égal à 100 GPa.

7. Fil selon la revendication 6, caractérisé en ce que, à l'état carbone, les fibres de carbone bas module représentent au moins 30 % en poids du mélange de fibres.

8. Fil selon l'une quelconque des revendications 6 et 7, caractérisé en ce que les fibres qui, à l'état carbone, sont des fibres bas module, sont choisies parmi les fibres à précurseur phénolique, les fibres à précurseur brai isotrope et les fibres à précurseur cellulosique.

9. Fil selon l'une quelconque des revendications 1 à 8, caractérisé en ce que les fibres en céramique ou en précurseur de céramique sont, à l'état céramique, des fibres en carbure de silicium.

10. Procédé de fabrication de préformes fibreuses pour des pièces en matériau composite, comportant les étapes qui consistent à :
- fournir un fil (18) comportant des fibres (14) discontinues parallèles entre elles et non retordues maintenues au moyen d'un fil de guipage (16) en une matière fugitive enroulé autour des fibres,
- réaliser une texture fibreuse bidimensionnelle (20) au moyen dudit fil,
- superposer des strates formées par ladite texture fibreuse,
- éliminer le fil de guipage, et
- aiguilleter les strates superposées afin de les lier entre elles au moyen de fibres tirées des fils et s'étendant à travers plusieurs strates superposées,
caractérisé en ce que l'on utilise au moins pour une partie de la texture fibreuse bidimensionnelle un fil hybride (18) selon l'une quelconque des revendications 1 à 9.

11. Procédé selon la revendication 10, caractérisé en ce que la préforme aiguilletée est traitée thermiquement à une température supérieure à 1 300°C.

12. Procédé selon la revendication 10, caractérisé en ce que la préforme aiguilletée est traitée thermiquement à une température d'environ 1 600°C.

13. Procédé selon l'une quelconque des revendications 10 à 12, pour la réalisation de préformes fibreuses (24) pour des disques de friction (26) en matériau composite, caractérisé en ce que les strates sont parallèles aux faces de frottement des disques.

14. Procédé selon la revendication 13, caractérisé en ce qu'on utilise au moins pour une partie de la texture fibreuse bidimensionnelle un fil hybride comportant des fibres de carbone bas module, ayant un module de Young au plus égal à 100 GPa.

15. Procédé selon la revendication 14, caractérisé en ce que l'on utilise un fil hybride comprenant des fibres de carbone haut module, ayant un module de Young au moins égal à 150 GPa, dont le diamètre est au moins égal à 8 µm.

16. Procédé selon l'une quelconque des revendications 14 et 15, caractérisé en ce que la texture fibreuse bidimensionnelle est formée de fils s'étendant dans au moins deux directions différentes et les fils orientés suivant une première direction comprennent un mélange de fibres contenant des fibres carbone bas module ayant un module de Young au plus égal à 100 GPa, et en ce que l'aiguilletage est réalisé au moyen d'aiguilles dont l'orientation est choisie de sorte qu'elles accrochent préférentiellement des fibres des fils orientés suivant la première direction.

17. Préforme fibreuse pour pièce en matériau composite comprenant des strates d'une texture fibreuse bidimensionnelle (20) superposées et liées entre elles au moyen de fibres tirées de la texture fibreuse et s'étendant transversalement par rapport aux strates, caractérisée en ce que les fibres (14) de la texture fibreuse (20) comprennent un mélange intime d'au moins deux natures différentes de fibres choisies parmi des fibres de carbone à précurseur polyacrylonitrilc préoxydé, des fibres de carbone à précurseur brai anisotrope, des fibres de carbone à précurseur brai isotrope, de fibres de carbone à précurseur phénolique, des fibres de carbone à précurseur viscose et des fibres en céramique, et le mélange de fibres comprend au moins 15 % en poids de fibres de carbone haute résistance, ayant une résistance en traction au moins égale à 1 500 MPa et un module au moins égal à 150 GPa.

18. Préforme selon la revendication 17, caractérisée en ce que les fibres de carbone haute résistance ont une résistance en traction au moins égale à 2 000 MPa.

19. Préforme selon l'une quelconque des revendications 17 et 18, caractérisée en ce que les fibres de carbone haute résistance ont un module au moins égal à 200 GPa.

20. Préforme selon la revendication 15, caractérisée en ce que le mélange de fibres comprend au moins 15 % en poids de fibres de carbone bas module, ayant un module de Young au plus égal à 100 GPa.

21. Préforme selon quelconque des revendications 19 et 20, caractérisée en ce que les fibres tirées de la texture fibreuse et s'étendant transversalement par rapport aux strates sont majoritairement des fibres de carbone bas module, ayant un module de Young au plus égal à 100 GPa.

22. Procédé de fabrication d'un fil (18) selon l'une quelconque des revendications 1 à 9, caractérisé en ce qu'il comprend les étapes qui consistent à :
- fournir des ensembles (10, 10') de filaments continus, chaque ensemble étant constitué de filaments de même nature choisie parmi un carbone ou un précurseur de carbone à base polyacrylonitrile, un carbone ou un précurseur de carbone à base brai anisotrope, un carbone ou un précurseur de carbone à base brai isotrope, un carbone ou un précurseur de carbone à base phénolique, un carbone ou un précurseur de carbone à base cellulosique et une céramique ou un précurseur de céramique,
- soumettre chaque ensemble de fibres à un étirage et craquage contrôlés pour obtenir des fibres discontinues parallèles entre elles (12, 12'),
- mélanger intimement les fibres d'au moins deux ensembles de fibres craqués de natures différentes l'une de l'autre, pour obtenir un fil hybride (14) dans lequel les fibres discontinues mélangées sont parallèles entre elles et non retordues, le mélange comprenant des fibres de carbone ou de précurseur de carbone qui, à l'état carbone, représentent au moins 15 % en poids du mélange de fibres et constituent des fibres de carbone haute résistance ayant une résistance en traction au moins égale à 1 500 MPa et un module au moins égal à 150 GPa, et
- entourer les fibres discontinues mélangées d'un fil de guipage (16) en une matière fugitive afin d'assurer l'intégrité du fil hybride obtenu.

23. Procédé selon la revendication 22, caractérisé en ce que le mélange intime des fibres est réalisé par passage des ensembles de fibres craqués (12, 12') dans un gill-box.

24. Procédé selon l'une quelconque des revendication 22 et 23, caractérisé en ce que les fibres qui, à l'état carbone, sont des fibres haute résistance sont choisies parmi les fibres à précurseur polyacrylonitrile préoxydé et les fibres à précurseur brai anisotrope.

25. Procédé selon l'une quelconque des revendications 22 à 24, caractérisé en ce que le mélange de fibres comprend des fibres de carbone ou de précurseur de carbone qui, à l'état carbone, représentent au moins 30 % en poids du mélange de fibres et constituent des fibres de carbone haute résistance.

26. Procédé selon l'une quelconque des revendications 22 à 25, caractérisé en ce que le mélange de fibres comprend des fibres de carbone ou de précurseur de carbone qui, à l'état carbone, représentent au moins 15 % en poids du mélange de fibres et constituent des fibres de carbone bas module, ayant un module de Young au plus égal à 100 GPa.

27. Procédé selon la revendication 26, caractérisé en ce que le mélange de fibres comprend des fibres de carbone ou de précurseur de carbone qui, à l'état carbone, représentent au moins 30 % en poids du mélange de fibres et constituent des fibres de carbone bas module.

28. Procédé selon les revendications 26 et 27, caractérisé en ce que les fibres qui, à l'état carbone, sont des fibres bas module, sont choisies parmi les fibres à précurseur phénolique, les fibres de carbone à précurseur brai isotrope et les fibres à précurseur cellulosique.

29. Procédé selon l'une quelconque des revendications 22 à 28, caractérisé en ce que les fibres en céramique ou en précurseur de céramique sont, à l'état céramique, des fibres en carbure de silicium.

## Patentansprüche

1. Faden, der zur Herstellung von Faser-Vorformlingen für Teile aus Verbundwerkstoff bestimmt ist und diskontinuierliche Fasern (14) aufweist, die zueinander parallel und ungezwirnt sind und mit Hilfe eines Umwicklungsfadens (16) aus einem flüchtigen Material, welcher um die Fasern herumgewickelt ist, gehalten sind,
**dadurch gekennzeichnet**, daß der Faden (18) ein Hybridfaden ist, in welchem die Fasern eine intime Mischung von wenigstens zwei unterschiedlichen Arten von Fasern aufweisen, welche ausgewählt sind unter: Fasern aus Kohlenstoff oder aus einem Vorläufer von Kohlenstoff auf Basis von voroxidiertem Polyacrylnitril, Fasern aus Kohlenstoff oder aus einem Vorläufer von Kohlenstoff auf Basis von anisotropem Pech, Fasern aus Kohlenstoff oder aus einem Vorläufer von Kohlenstoff auf Basis von isotropem Pech, Fasern aus Kohlenstoff oder aus einem Vorläufer von Kohlenstoff auf Phenolbasis, Fasern aus Kohlenstoff oder aus einem Vorläufer von Kohlenstoff auf Zellulosebasis und Fasern aus Keramik oder aus einem Vorläufer von Keramik und daß die Fasermischung Fasern aus Kohlenstoff oder aus einem Vorläufer von Kohlenstoff aufweist, welche im Kohlenstoffzustand mindestens 15 Gew.-% der Fasermischung betragen und hochfeste Fasern aus Kohlenstoff bilden, welche eine Zugfestigkeit von wenigstens gleich 1500 MPa und einen Modul von wenigstens gleich 150 GPa aufweisen.

2. Faden nach Anspruch 1,
**dadurch gekennzeichnet**,
daß die Fasern, die im Kohlenstoffzustand hochfeste Fasern sind, unter den Fasern auf Basis von Polyacrylnitril-Vorläufer und den Fasern auf Basis von anisotropem Pech-Vorläufer ausgewählt sind.

3. Faden nach einem der Ansprüche 1 und 2,
**dadurch gekennzeichnet**,
daß die Fasermischung Fasern aus Kohlenstoff oder aus einem Vorläufer von Kohlenstoff aufweist, welche im Kohlenstoffzustand hochfeste Fasern aus Kohlenstoff sind und wenigstens 30 Gew.-% der Fasermischung betragen.

4. Faden nach einem der Ansprüche 1 bis 3,
**dadurch gekennzeichnet**,
daß im Kohlenstoffzustand die hochfesten Fasern eine Zugfestigkeit von wenigstens gleich 2000 MPa aufweisen.

5. Faden nach einem der Ansprüche 1 bis 4,
**dadurch gekennzeichnet**, daß im Kohlenstoffzustand die hochfesten Fasern einen Modul von wenigstens gleich 200 GPa aufweisen.

6. Faden nach einem der Ansprüche 1 bis 5,
**dadurch gekennzeichnet**,
daß die Fasermischung Fasern aus Kohlenstoff oder aus einem Vorläufer von Kohlenstoff aufweist, welche im Kohlenstoffzustand wenigstens 15 Gew.-% der Fasermischung betragen und Niedrigmodul-Fasern aus Kohlenstoff bilden, welche einen Elastizitätsmodul von höchstens gleich 100 GPa aufweisen.

7. Faden nach Anspruch 6,
**dadurch gekennzeichnet**,
daß im Kohlenstoffzustand die Niedrigmodul-Fasern aus Kohlenstoff wenigstens 30 Gew.-% der Fasermischung betragen.

8. Faden nach einem der Ansprüche 6 und 7,
**dadurch gekennzeichnet**,
daß die Fasern, die im Kohlenstoffzustand Niedrigmodul-Fasern sind, unter den Fasern mit Phenol-Vorläufer, den Fasern mit isotropem Pech-Verläufer und den Fasern mit Zellulose-Vorläufer ausgewählt sind.

9. Faden nach einem der Ansprüche 1 bis 8,
**dadurch gekennzeichnet**,
daß die Fasern aus Keramik oder aus einem Vorläufer von Keramik im Keramikzustand Fasern aus Siliziumcarbid sind.

10. Verfahren zur Herstellung von Faser-Vorformlingen für Teile aus Verbundwerkstoff, wobei das Verfahren die folgenden Schritte aufweist:
- Liefern eines Fadens (18), welcher diskontinuierliche Fasern (14) aufweist, die zueinander parallel und ungezwirnt sind und mit Hilfe eines Umwicklungsfadens (16) aus einem flüchtigen Material, welcher um die Fasern herumgewickelt ist, gehalten sind,
- Herstellen eines zweidimensionalen Faser-Gebildes (20) mit Hilfe des genannten Fadens,
- Übereinanderlegen von Schichten. welche durch das genannte Faser-Gebilde gebildet sind,
- Beseitigen des Umwicklungsfadens und
- Nadeln der übereinandergelegten Schichten, um sie untereinander mit Hilfe von Fasern zu verbinden, welche von Fäden gezogen werden und sich quer durch mehrere übereinandergelegte Schichten erstrecken,
**dadurch gekennzeichnet**,
daß man wenigstens für einen Teil des zweidimensionalen Faser-Gebildes einen Hybridfaden (18) gemäß einem der Ansprüche 1 bis 9 verwendet.

11. Verfahren nach Anspruch 10,
**dadurch gekennzeichnet**,
daß der genadelte Vorformling bei einer Temperatur oberhalb von 1300 °C thermisch behandelt wird.

12. Verfahren nach Anspruch 10,
**dadurch gekennzeichnet**,
daß der genadelte Vorformling bei einer Temperatur von ungefähr 1600 °C thermisch behandelt wird.

13. Verfahren nach einem der Ansprüche 10 bis 12 für die Herstellung von Faser-Vorformlingen (24) für Bremsscheiben (26) aus Verbundwerkstoff,
**dadurch gekennzeichnet**,
daß die Schichten zu Reibungsflächen der Scheiben parallel sind.

14. Verfahren nach Anspruch 13,
**dadurch gekennzeichnet**,
daß man wenigstens für einen Teil des zweidimensionalen Faser-Gebildes einen Hybridfaden verwendet, welcher Niedrigmodul-Fasern aus Kohlenstoff aufweist, welche einen Elastizitätsmodul von höchstens gleich 100 GPa aufweisen.

15. Verfahren nach Anspruch 14,
**dadurch gekennzeichnet**,
daß man einen Hybridfaden verwendet, welcher Hochmodul-Fasern aus Kohlenstoff aufweist, welche einen Elastizitätsmodul von wenigstens gleich 150 GPa aufweisen und deren Durchmesser wenigstens gleich 8 µm ist.

16. Verfahren nach einem der Ansprüche 14 und 15,
**dadurch gekennzeichnet**,
daß das zweidimensionale Faser-Gebilde aus Fäden gebildet wird, welche sich in wenigstens zwei unterschiedlichen Richtungen erstrecken, und daß die gemäß einer ersten Richtung orientierten Fäden eine Fasermischung aufweisen, welche Niedrigmodul-Fasern aus Kohlenstoff enthält, welche einen Elastizitätsmodul von höchstens gleich 100 GPa aufweisen, und dadurch gekennzeichnet, daß die Nadelung mit Hilfe von Nadeln durchgeführt wird, deren Ausrichtung derart gewählt ist, daß sie vorzugsweise Fasern der Fäden ergreifen, die gemäß der ersten Richtung orientiert sind.

17. Faser-Vorformling für ein Teil aus Verbundwerkstoff, wobei der Faser-Vorformling Schichten aus einem zweidimensionalen Faser-Gebilde (20) aufweist, welche übereinandergelegt und untereinander mit Hilfe von Fasern verbunden sind, die von dem Faser-Gebilde gezogen sind und sich in Bezug auf die Schichten in Querrichtung erstrecken,
**dadurch gekennzeichnet**,
daß die Fasern (14) des Faser-Gebildes (20) eine intime Mischung von wenigstens zwei unterschiedlichen Arten von Fasern aufweisen, welche ausgewählt sind unter: Kohlenstoff-Fasern mit voroxidiertem Polyacrylnitril-Vorläufer, Kohlenstoff-Fasern mit anisotropem Pech-Vorläufer, Kohlenstoff-Fasern mit istropem Pech-Vorläufer, Kohlenstoff-Fasern mit Phenol-Vorläufer, Kohlenstoff-Fasern mit Viskose-Vorläufer und keramischen Fasern und daß die Fasermischung wenigstens 15 Gew.-% hochfeste Kohlenstoffasern aufweist, welche eine Zugfestigkeit von wenigstens gleich 1500 MPa und einen Modul von wenigstens gleich 150 GPa aufweisen.

18. Vorformling nach Anspruch 17,
**dadurch gekennzeichnet**,
daß die hochfesten Kohlenstoffasern eine Zugfestigkeit von wenigstens gleich 2000 MPa aufweisen.

19. Vorformling nach einem der Ansprüche 17 und 18,
**dadurch gekennzeichnet**,
daß die hochfesten Kohlenstoffasern einen Modul von wenigstens gleich 200 GPa aufweisen.

20. Vorformling nach Anspruch 15,
**dadurch gekennzeichnet**,
daß die Fasermischung wenigstens 15 Gew.-% Niedrigmodul-Kohlenstoffasern aufweist, welche einen Elastizitätsmodul von höchstens gleich 100 GPa aufweisen.

21. Vorformling nach einem der Ansprüche 19 und 20,
**dadurch gekennzeichnet**,
daß die Fasern, welche von dem Faser-Gebilde gezogen sind und sich in Querrichtung in Bezug auf die Schichten erstrecken, hauptsächlich Niedrigmodul-Kohlenstoffasern sind, welche einen Elastizitätsmodul von höchstens gleich 100 GPa aufweisen.

22. Verfahren zur Herstellung eines Fadens (18) entsprechend einem der Ansprüche 1 bis 9,
**dadurch gekennzeichnet**,
daß das Verfahren die folgenden Schritte aufweist:
- Liefern von Anordnungen (10, 10') aus kontinuierlichen Filamenten, wobei jede Anordnung aus Filamenten gleicher Art gebildet wird, welche ausgewählt ist unter: einem Kohlenstoff oder einem Vorläufer von Kohlenstoff auf Basis von Polyacrylnitril, einem Kohlenstoff oder einem Vorläufer von Kohlenstoff auf Basis von anisotropem Pech, einem Kohlenstoff oder einem Vorläufer von Kohlenstoff auf Basis von isotropem Pech, einem Kohlenstoff oder einem Vorläufer von Kohlenstoff auf Phenol-Basis, einem Kohlenstoff oder einem Vorläufer von Kohlenstoff auf Zellulose-Basis und einer Keramik oder einem Vorläufer von Keramik,
- Unterwerfen jeder Anordnung aus Fasern einem Ziehen und Reißen, wobei Ziehen und Reißen eingestellt werden, um diskontinuierliche, zueinander parallele Fasern (12, 12') zu erhalten,
- intimes Mischen der Fasern mindestens zweier gerissener Anordnungen aus Fasern mit voneinander unterschiedlichen Arten, um einen Hybridfaden (14) zu erhalten, in welchem die diskontinuierlichen, gemischten Fasern zueinander parallel und ungezwirnt sind, wobei die Mischung Fasern aus Kohlenstoff oder aus einem Vorläufer von Kohlenstoff aufweist, welche im Kohlenstoffzustand wenigstens 15 Gew.-% der Fasermischung betragen und hochfeste Kohlenstoffasern bilden, welche eine Zugfestigkeit von wenigstens gleich 1500 MPa und einen Modul von wenigstens gleich 150 GPa aufweisen, und
- Umgeben der diskontinuierlichen, gemischten Fasern mit einem Umwicklungsfaden (16) aus einem flüchtigen Material, um die Integrität des erhaltenen Hybridfadens zu gewährleisten.

23. Verfahren nach Anspruch 22,
**dadurch gekennzeichnet**,
daß das intime Mischen der Fasern mittels Passage der gerissenen Anordnungen aus Fasern (12, 12') in einer Gill-Box durchgeführt wird.

24. Verfahren nach einem der Ansprüche 22 und 23,
**dadurch gekennzeichnet**,
daß die Fasern, welche im Kohlenstoffzustand hochfeste Fasern sind, unter Fasern mit voroxidiertem Polyacrylnitril-Vorläufer und Fasern mit anisotropem Pech-Vorläufer ausgewählt werden.

25. Verfahren nach einem der Ansprüche 22 bis 24,
**dadurch gekennzeichnet**,
daß die Fasermischung Fasern aus Kohlenstoff oder aus einem Vorläufer von Kohlenstoff aufweist, welche im Kohlenstoffzustand wenigstens 30 Gew.-% der Fasermischung betragen und hochfeste Kohlenstoffasern bilden.

26. Verfahren nach einem der Ansprüche 22 bis 25,
**dadurch gekennzeichnet**,
daß die Fasermischung Fasern aus Kohlenstoff oder aus einem Vorläufer von Kohlenstoff aufweist, welche im Kohlenstoffzustand wenigstens 15 Gew.-% der Fasermischung betragen und Niedrigmodul-Kohlenstoffasern bilden, welche einen Elastizitätsmodul von höchstens gleich 100 GPa aufweisen.

27. Verfahren nach Anspruch 26,
**dadurch gekennzeichnet**,
daß die Fasermischung Fasern aus Kohlenstoff oder aus einem Vorläufer von Kohlenstoff aufweist, welche im Kohlenstoffzustand wenigstens 30 Gew.-% der Fasermischung betragen und Niedrigmodul-Kohlenstoffasern bilden.

28. Verfahren nach den Ansprüchen 26 und 27,
**dadurch gekennzeichnet**,
daß die Fasern, die im Kohlenstoffzustand Niedrigmodul-Fasern sind, unter den Fasern mit Phenol-Vorläufer, den Kohlenstoffasern mit isotropem Pech-Vorläufer und den Fasern mit Zellulose-Vorläufer ausgewählt werden.

29. Verfahren nach einem der Ansprüche 22 bis 28,
**dadurch gekennzeichnet**,
daß die Fasern aus Keramik oder aus einem Vorläufer von Keramik im Keramikzustand Fasern aus Siliziumcarbid sind.

## Claims

1. A yarn for fabricating fiber preforms for composite material parts, the yarn comprising discontinuous fibers (14) which are parallel to another and not twisted and which are held together by a covering yarn (16) of sacrificial material wound around the fibers,
characterized in that the yam (18) is a hybrid yarn in which the fibers comprise an intimate mixture of fibers of at least two different natures selected from pre-oxidized polyacrylonitrile based carbon fibers or carbon precursor fibers, anisotropic pitch based carbon fibers or carbon precursor fibers, isotropic pitch based carbon fibers or carbon precursor fibers, phenolic based carbon fibers or carbon precursor fibers, cellulosic based carbon fibers or carbon precursor fibers, and ceramic fibers or ceramic precursor fibers, and the mixture of fibers comprises carbon fibers or carbon precursor fibers which, in the carbon state, comprise at least 15% by weight of the mixture of fibers and constitute high strength carbon fibers having a tensile strength of at least 1500 MPa and a modulus of at least 150 GPa.

2. A yarn according to claim 1, characterized in that the fibers which, in the carbon state, are high strength fibers, are selected from fibers based on a polyacrylonitrile precursor and fibers based on an anisotropic pitch precursor.

3. A yarn according to claim 1 or 2, characterized in that the mixture of fibers comprises carbon fibers or carbon precursor fibers which, in the carbon state, are high strength carbon fibers and which comprise at least 30% by weight of the mixture of fibers.

4. A yarn according to any one of claims 1 to 3, characterized in that in the carbon state, the high strength fibers have a tensile strength of at least 2000 MPa.

5. A yarn according to any one of claims 1 to 4, characterized in that in the carbon state, the high strength fibers have a modulus of at least 200 GPa.

6. A yarn according to any one of claims 1 to 5, characterized in that the mixture of fibers comprises carbon fibers or carbon precursor fibers which, in the carbon state, comprise at least 15% by weight of the mixture of fibers and constitute low modulus carbon fibers, with a Young's modulus of at most 100 GPa.

7. A yarn according to claim 6, characterized in that in the carbon state, the low modulus carbon fibers comprise at least 30% by weight of the fiber mixture.

8. A yarn according to any one of claims 6 and 7, characterized in that the fibers which, in the carbon state, are low modulus carbon fibers, are selected from phenolic precursor fibers, isotropic pitch precursor fibers and cellulosic precursor fibers.

9. A yarn according to any one of claims 1 to 8, characterized in that the ceramic fibers or ceramic precursor fibers are silicon carbide fibers in the ceramic state.

10. A method of fabricating fiber preforms for composite material parts, comprising the steps consisting of:
- providing a yarn (18) comprising discontinuous fibers (14) which are parallel to another and not twisted and which are held together by a covering yarn (16) of sacrificial material wound around the fibers;
- forming a two-dimensional fiber fabric (20) using said yarn;
- superposing plies formed by said fiber fabric;
- eliminating the covering yarn; and
- needling the superposed plies to connect them to each other by means of fibers pulled from the yarns and extending through a plurality of superposed plies;
characterized in that at least a portion of the two-dimensional fiber fabric is formed from a hybrid yarn (18) according to any one of claims 1 to 9.

11. A method according to claim 10, characterized in that the needled preform is heat treated at a temperature of more than 1300°C.

12. A method according to claim 10, characterized in that the needled preform is heat treated at a temperature of about 1600°C.

13. A method according to any one of claims 10 to 12, for forming fiber preforms (24) for composite material friction disks (26), characterized in that the plies are parallel to the friction surfaces of the disks.

14. A method according to claim 13, characterized in that at least a portion of the two-dimensional fiber fabric is formed by a hybrid yarn comprising low modulus carbon fibers having a Young's modulus of at most 100 GPa.

15. A method according to claim 14, characterized in that a hybrid yarn comprising high modulus carbon fibers is used, with a Young's modulus of at least 150 GPa, and with a diameter of at least 8 µm.

16. A method according to claim 14 or 15, characterized in that the two-dimensional fiber fabric is formed by yarns extending in at least two different directions and the yarns oriented in a first direction comprise a mixture of fibers containing low modulus carbon fibers having a Young's modulus of at most 100 GPa, and in that needling is carried out using needles with an orientation which is selected so that they preferentially catch yam fibers which are oriented in the first direction.

17. A fiber preform for a composite material part comprising superposed plies of a two-dimensional fiber fabric (20), which plies are connected to each other by means of fibers pulled from the fiber fabric and extending transversely with respect to the plies, characterized in that the fibers (14) of the fiber fabric (20) comprise an intimate mixture of fibers of at least two different natures selected from carbon fibers having a pre-oxidized polyacrylontrile precursor, carbon fibers having an anisotropic pitch precursor, carbon fibers having an isotropic pitch precursor, carbon fibers having a phenolic precursor, carbon fibers having a viscose precursor and ceramic fibers, and the mixture of fibers comprises at least 15% by weight of high strength carbon fibers, having a tensile strength of at least 1500 MPa and a modulus of at least 150 GPa.

18. A preform according to claim 17, characterized in that the high strength carbon fibers have a tensile strength of at least 2000 MPa.

19. A preform according to claim 17 or 18, characterized in that the high strength carbon fibers have a modulus of at least 200 GPa.

20. A preform according to claim 15, characterized in that the mixture of fibers comprises at least 15% by weight of low modulus carbon fibers having a Young's modulus of at most 100 GPa.

21. A preform according to claim 19 or 20, characterized in that the fibers pulled from the fiber fabric and extending transversely with respect to the plies are mainly low modulus carbon fibers having a Young's modulus of at most 100 GPa

22. A method of fabricating a yarn (18) according to any one of claims 1 to 9, characterized in that it comprises the steps which consist of:
- providing ensembles (10, 10') of continuous filaments, each ensemble being constituted by filaments of the same nature selected from a polyacrylonitrile based carbon or carbon precursor, an anisotropic pitch based carbon or carbon precursor, an isotropic pitch based carbon or carbon precursor, a phenolic based carbon or carbon precursor, a cellulosic based carbon or carbon precursor and a ceramic or a ceramic precursor;
- subjecting each ensemble of fibers to controlled stretching and cracking to obtain discontinuous parallel fibers (12, 12') ;
- intimately mixing the fibers of at least two ensembles of cracked fibers of natures which are different from each other, to obtain a hybrid yarn (14) in which the mixed discontinuous fibers are parallel to each other and not twisted, the mixture comprising carbon fibers or carbon precursor fibers which, in the carbon state, comprise at least 15% by weight of the mixture of fibers and constitute high strength carbon fibers having a tensile strength of at least 1500 MPa and a modulus of at least 150 GPa; and
- winding the discontinuous mixed fibers with a covering yarn (16) of sacrificial material to ensure the integrity of the hybrid yarn obtained.

23. A method according to claim 22, characterized in that the intimate mixture of fibers is produced by passing the ensembles of cracked fibers (12, 12') through a gill-box.

24. A method according to claim 22 or 23, characterized in that the fibers which, in the carbon state, are high strength fibers are selected from pre-oxidized polyacrylonitrile precursor fibers and anisotropic pitch precursor fibers.

25. A method according to any one of claims 22 to 24, characterized in that the mixture of fibers comprises carbon fibers or carbon precursor fibers which, in the carbon state, comprise at least 30% by weight of the mixture of fibers and constitute high strength carbon fibers.

26. A method according to any one of claims 22 to 25, characterized in that the mixture of fibers comprises carbon fibers or carbon precursor fibers which, in the carbon state, comprise at least 15% by weight of the mixture of fibers and constitute low modulus carbon fibers having a Young's modulus of at most 100 GPa.

27. A method according to claim 26, characterized in that the mixture of fibers comprises carbon fibers or carbon precursor fibers which, in the carbon state, comprise at least 30% by weight of the mixture of fibers and constitute low modulus carbon fibers.

28. A method according to claims 26 and 27, characterized in that the fibers which, in the carbon state, are low modulus carbon fibers, are selected from phenolic precursor fibers, isotropic pitch carbon precursor fibers and cellulosic precursor fibers.

29. A method according to any one of claims 22 to 28, characterized in that the ceramic fibers or ceramic precursor fibers are silicon carbide fibers in the ceramic state.
